# EUROPEAN PATENT APPLICATION

(11) **EP 4 779 481 A1**
(43) Date of publication of application: **22.07.2026**
(21) Application number: 26151240.4
(22) Date of filing: 12.01.2026
(51) Int. Cl.: G06F 12/0862, G06F 12/0855, G06F 12/0806, G06F 12/0811

(54) **DYNAMIC CONTROL OF PREFETCHING BASED ON PREFETCHING ACCURACY IN A COMPUTING SYSTEM**

(30) Priority: 21.01.2025 US 202519033150
(71) Applicant: Ampere Computing LLC, Santa Clara, California 95054 (US)
(72) Inventor: AHMADI, Agreen, Santa Clara (US); CHAFFIN, Benjamin Crawford, Santa Clara (US)
(74) Representative: Papula Oy

(57) **Abstract**

Dynamic control of prefetching based on prefetching accuracy in a computing system, and related methods and computer readable media. The computing system comprises a processor that includes one or more Central Processing Unit (CPU) cores each having an associated cache memory. The CPU core(s) is configured to generate a value indicative of a prefetching accuracy of the CPU core for prefetching of data, instructions, or both data and instructions from system memory external to the processor for storage in the cache memory for the CPU core and control the prefetching performed by the CPU core based on the value indicative of the prefetching accuracy. In this manner, the number of memory access requests for prefetching is reduced when prefetching accuracy is below a certain threshold, which in turn mitigates memory bandwidth contention, particularly in a multi-CPU core processor.

## Description

### Field of the Disclosure

The technology of the disclosure relates to computing systems that include a Central Processing Unit(s) (CPU(s)) (i.e., processor(s)) and a memory system for storing and accessing data.

### Background

Computing systems including one or more Central Processing Units (CPUs), or microprocessors, typically utilize prefetching of data, instructions, or both to reduce memory latency. Using prefetching of data as an example, a CPU prefetches data from a relatively slower-access portion of a memory system associated with the CPU (e.g., main memory) and stores the prefetched data in a relatively faster-access portion of the memory system (e.g., Level 1 (L1) cache) prior to a time at which the prefetched data will be needed by a program executing on the CPU. In this manner, when the data is needed by the program, the CPU can retrieve the data from the faster-access portion of the memory system, thereby avoiding the need to wait on the data to be retrieved from the slower-access portion of the memory system, which in turn increases the execution speed of the CPU.

However, when performing aggressive prefetching, particularly in a multi-CPU system in which multiple CPU cores utilize shared memory, a large number of prefetching requests may be issued by the CPU cores, resulting in a significant amount of contention of the memory bandwidth and consequently longer memory latencies. Therefore, there is a need for systems and methods for decreasing the number of prefetching requests while maintaining the benefit of prefetching.

### Summary

Aspects disclosed herein include dynamically controlling prefetching in a computing system based on prefetching accuracy in a computing system. Related methods and computer-readable media are also disclosed. In exemplary aspects, a computing system is provided that includes a processor including one or more Central Processing Unit (CPU) cores having associated cache memory. At least one of the CPU cores is configured to control prefetching of data and/or instructions from memory to the associated cache memory based on prefetching accuracy. In exemplary embodiments, the CPU core generates a value indicative of the prefetching accuracy based on prefetch line fills and demand hits in the cache memory. More specifically, in exemplary embodiments, the generated value is adjusted (e.g., increased) by a first value for each instance of a prefetch line fill where data is prefetched from a memory line of memory and stored in a memory line of the cache memory and adjusted (e.g., decreased) by a second value for each instance of a demand hit where prefetched data is accessed from the cache memory. Based on the value indicative of the prefetching accuracy, prefetching is deactivated or partially deactivated when the prefetching accuracy is less than a certain accuracy threshold. In this manner, the number of prefetch requests when prefetching accuracy is low can be reduced, thereby reducing memory bandwidth utilization and, in the case of a multi-CPU core processor, contention for the memory bandwidth by the multiple CPU cores.

In this regard, in one exemplary aspect, a computing system is provided. The computing system comprises a processor that includes a CPU core and a cache memory for the CPU core. The CPU core is configured to generate a value indicative of a prefetching accuracy of the CPU core for prefetching of data, instructions, or both data and instructions from system memory external to the processor for storage in the cache memory for the CPU core and control the prefetching performed by the CPU core based on the value indicative of the prefetching accuracy.

In one embodiment, the value indicative of the prefetching accuracy of the CPU core is an unsigned saturating counter value, and the CPU core generates the value indicative of the prefetching accuracy of the CPU core by adjusting the unsigned saturating counter value by a first value for each instance of a prefetching line fill in which a prefetched memory line is stored in the cache memory for the CPU core and adjusting the unsigned saturating counter value by a second value for each instance of a hit on a prefetched memory line in the cache memory. In one embodiment, a magnitude of the first value is less than a magnitude of the second value. In one embodiment, the second value is a fixed value, and the first value is a function of a target prefetching accuracy for the CPU core. In another embodiment, the prefetching requests memory lines from memory of the computing system to be stored in the cache memory, and either or both of the first and second values are a function of an amount of bandwidth for the memory for processing memory access requests from the CPU core and one or more additional CPU cores of the computing system is being utilized. In one embodiment, the CPU core adjusts the unsigned saturating counter value by the first value by increasing the unsigned saturating counter by the first value for each instance of a prefetching line fill in which a prefetched memory line is stored in the cache memory for the CPU core and adjusts the unsigned saturating counter value by the second value by decreasing the unsigned saturating counter by the second value for each instance of a hit on a prefetched memory line in the cache memory.

In one embodiment, in order to control the prefetching of the CPU core, the CPU core is further configured to determine, based on the value indicative of the prefetching accuracy, that the prefetching accuracy of the CPU core is less than a first prefetching accuracy threshold and, in response to thereto, partially deactivate the prefetching of the CPU core. In one embodiment, when prefetching is partially deactivated, the CPU core issues fewer prefetching requests than when prefetching is activated. In one embodiment, the CPU core is further configured to update the value indicative of the prefetching accuracy of the CPU core while the prefetching is partially deactivated, determine based on the updated value that the prefetching accuracy of the CPU core has increased to or above a second prefetching accuracy threshold for activating the prefetching of the CPU core, and, in response thereto, activate the prefetching of the CPU core. In one embodiment, the first prefetching accuracy threshold is equal to the second prefetching accuracy threshold. In another embodiment, the first prefetching accuracy threshold is less than the second prefetching accuracy threshold.

In another exemplary aspect, a method of controlling prefetching performed by a CPU core of a processor in a computer system is provided. The method comprises generating a value indicative of a prefetching accuracy of the CPU core for prefetching of data, instructions, or both data and instructions from system memory external to the processor for storage in a cache memory of the CPU core within the processor and controlling the prefetching performed by the CPU core based on the value indicative of the prefetching accuracy.

In one embodiment, the value indicative of the prefetching accuracy of the CPU core is an unsigned saturating counter value, and generating the value indicative of the prefetching accuracy of the CPU core comprises adjusting the unsigned saturating counter value by a first value for each instance of a prefetching line fill in which a prefetched memory line is stored in cache memory for the CPU core and adjusting the unsigned saturating counter value by a second value for each instance of a hit on a prefetched memory line in the cache memory. In one embodiment, a magnitude of the first value is less than a magnitude of the second value. In another embodiment, the second value is a fixed value, and the first value is a function of a target prefetching accuracy for the CPU core. In another embodiment, the prefetching of the CPU core requests memory lines from memory of the computing system to be stored in the cache memory, and either or both of the first and second values are a function of an amount of bandwidth for the memory for processing memory access requests from the CPU core and one or more additional CPU cores of the computing system is being utilized. In one embodiment, adjusting the unsigned saturating counter value by the first value comprises increasing the unsigned saturating counter by the first value for each instance of a prefetching line fill in which a prefetched memory line is stored in the cache memory for the CPU core, and adjusting the unsigned saturating counter value by the second value comprises decreasing the unsigned saturating counter by the second value for each instance of a hit on a prefetched memory line in the cache memory.

In one embodiment, controlling the prefetching of the CPU core comprises determining, based on the value indicative of the prefetching accuracy, that the prefetching accuracy of the CPU core is less than a first prefetching accuracy threshold and, in response thereto, partially deactivating the prefetching of the CPU core. In one embodiment, when prefetching is partially deactivated, the CPU core issues fewer prefetching requests than when prefetching is activated. In one embodiment, the method further comprises updating the value indicative of the prefetching accuracy of the CPU core while the prefetching is partially deactivated, determining based on the updated value that the prefetching accuracy of the CPU core has increased to or above a second prefetching accuracy threshold for activating the prefetching of the CPU core, and, in response thereto, activating the prefetching of the CPU core. In one embodiment, the first prefetching accuracy threshold is equal to the second prefetching accuracy threshold. In another embodiment, the first prefetching accuracy threshold is less than the second prefetching accuracy threshold.

In another exemplary aspect, a non-transitory computer-readable medium is provided. The non-transitory computer-readable medium has stored thereon computer executable instructions which, when executed by a processor, cause the processor to generate a value indicative of a prefetching accuracy of prefetching performed by a CPU core of the processor and control the prefetching performed by the CPU core based on the value indicative of the prefetching accuracy.

Those skilled in the art will appreciate the scope of the present disclosure and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the disclosure, and together with the description serve to explain the principles of the disclosure.
Figure 1 is a block diagram of an exemplary computing system including a processor including one or more Central Processing Unit (CPU) cores that dynamically control prefetching based on prefetching accuracy, in accordance with embodiments of the present disclosure;
Figure 2 illustrates a prefetcher of a CPU core that dynamically controls prefetching based on prefetching accuracy, in accordance with embodiments of the present disclosure;
Figure 3 is a block diagram of one example embodiment of the prefetching accuracy tracker of the prefetcher of Figure 2;
Figure 4 is a flow chart that illustrates a procedure for dynamically controlling prefetching of a CPU core of a processor in a computing system, in accordance with embodiments of the present disclosure;
Figure 5 illustrates one example embodiment of the procedure of Figure 4; and
Figure 6 is a block diagram of an exemplary computer system that includes a processor that includes a plurality of CPU cores and peripheral devices and other resources, including a memory system, accessing through an internal coherent fabric bus, wherein the memory system supports address range memory mirroring.

### Detailed Description

Aspects disclosed herein include dynamically controlling prefetching in a computing system based on prefetching accuracy in a computing system. Related methods and computer-readable media are also disclosed. In exemplary aspects, a computing system is provided that includes a processor including one or more Central Processing Unit (CPU) cores having associated cache memory. At least one of the CPU cores is configured to control prefetching of data and/or instructions from memory to the associated cache memory based on prefetching accuracy. In exemplary embodiments, the CPU core generates a value indicative of the prefetching accuracy based on prefetch line fills and demand hits in the cache memory. More specifically, in exemplary embodiments, the generated value is adjusted (e.g., increased) by a first value for each instance of a prefetch line fill where data is prefetched from a memory line of memory and stored in a memory line of the cache memory and adjusted (e.g., decreased) by a second value for each instance of a demand hit where prefetched data is accessed from the cache memory. Based on the value of indicative of the prefetching accuracy, prefetching is deactivated or partially deactivated when the prefetching accuracy is less than a certain accuracy threshold. In this manner, the number of prefetch requests when prefetching accuracy is low can be reduced, thereby reducing memory bandwidth utilization and, in the case of a multi-CPU core processor, contention for the memory bandwidth by the multiple CPU cores.

In this regard, in one exemplary aspect, a computing system is provided. The computing system comprises a CPU core and a cache memory for the CPU core. The CPU core is configured to generate a value indicative of a prefetching accuracy of prefetching performed by the CPU core and control the prefetching performed by the CPU core based on the value indicative of the prefetching accuracy.

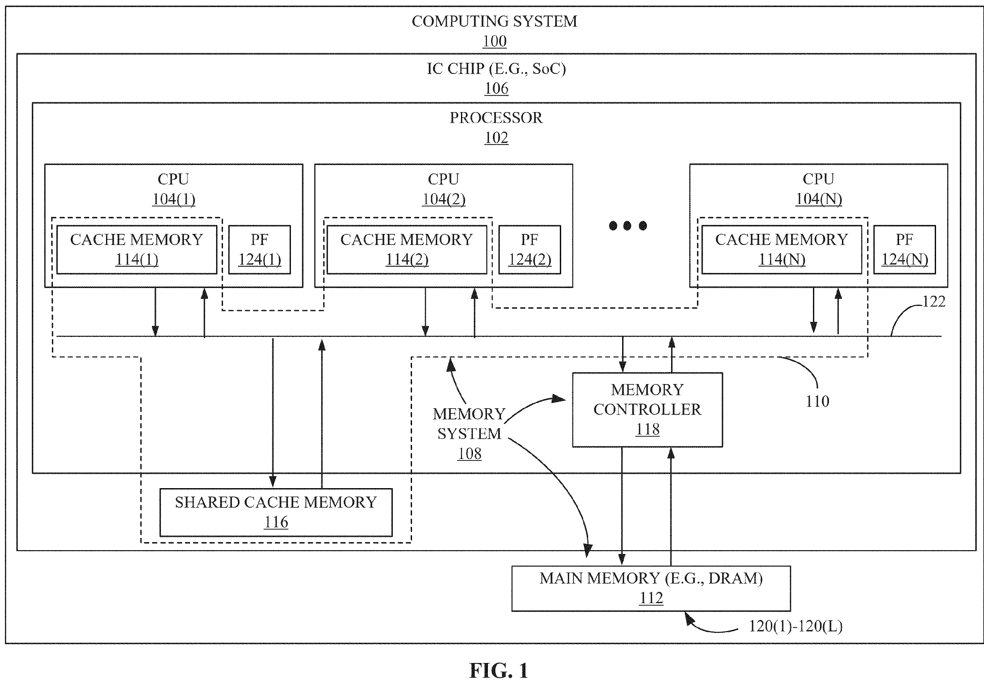

In this regard, Figure 1 is a block diagram of an exemplary computing system 100 that includes a processor 102 configured to perform computing tasks based on execution of program code. The processor 102 in this example includes one or more respective CPU cores 104(1)-104(N), wherein 'N' is a positive whole number representing the number of CPU cores included in the processor 102. As discussed in more detail below, one or more of the CPU cores 104(1)-104(N) can be configured to generate a value indicative of a prefetching accuracy of prefetching performed by the CPU core and control the prefetching performed by the CPU core based on the value indicative of the prefetching accuracy. The processor 102 as well as certain other computing resources can be packaged in an Integrated Circuit (IC) chip 106, such as to provide a System-on-a-Chip (SoC). The CPU cores 104(1)-104(N) in the processor 102 are configured to issue memory access requests (i.e., data read and data write requests) to a memory system 108 as part of the computing system 100.

The memory system 108 includes a cache memory system 110 and a main memory 112 as a system memory. In this example, the main memory 112 is a separate memory outside of the IC chip 106. For example, the main memory 112 may be Random Access Memory (RAM) such as, for instance, one or more DDR Dynamic RAM (DRAM) chip(s). The main memory 112 is a memory that is fully addressable by the Physical Address (PA) space of the computing system 100. In the illustrated example, the cache memory system 110 includes cache memories 114(1)-114(N) (e.g., Level 1 (L1) caches) that are dedicated for the respective CPU cores 104(1)-104(N) and a shared cache memory 116 that is shared by the CPU cores 104(1)-104(N), e.g., as a Level 2 (L2) or Level 3 (L3) cache. In the illustrated example, the shared cache memory 116 is separate from the processor 102 but within the IC chip 106. Note that the shared cache memory 116 is optional. Also note that, in an alternative embodiment, the cache memories 114(1)-114(N) are not included in the cache memory system 110, and the CPU cores 104(1)-104(N) share the shared cache memory 116 (e.g., as shared L1 cache). In this alternative embodiment, the shared cache memory 116 may alternatively be implemented within the processor 102, rather than external to the processor 102. Further, it should be noted that embodiments of the present disclosure are not limited to any specific cache or memory organization or hierarchy and can be applied at any cache or memory level.

With continuing reference to Figure 1, the computing system 100 also includes a memory controller 118 that controls access to memory lines 120(1)-120(L) (i.e., memory locations that are sized of a particular size, such as the size of a cache line in the cache memory system 110) in the main memory 112 in response to receiving a memory access request. For example, any one of the CPUs cores 104(1)-104(N), as a requesting device, may issue a memory access request to read data from the main memory 112, e.g., in response to processing a load or store instruction. The memory access request includes a target address of the data to be read from the main memory 112. Using CPU core 104(1) as an example, if the requested data is not in the cache memory 114(1) (i.e., a cache miss to the cache memory 114(1) which may be considered an L1 cache memory), the cache memory 114(1) sends a memory access request over an interconnect bus 122 in this example to the shared cache memory 116, which may be L2 or L3 cache memory. If the requested data is not in the shared cache memory 116 (i.e., a cache miss to the shared cache memory 116), the shared cache memory 116 sends a memory access request to the main memory 112 via the memory controller 118. Ultimately, the requested data is returned to the CPU core 104(1) from the memory system 108.

In accordance with embodiments of the present disclosure, the computing system 100 utilizes prefetching of data, instructions, or both data and instructions. For the remainder of the description, embodiments of the present disclosure are described in relation to prefetching of data; however, it is to be understood that the embodiments described herein are equally applicable to prefetching of instructions. In this regard, the CPU cores 104(1)-104(N) include respective prefetchers 124(1)-124(N) that operate to issue prefetching requests (i.e., memory access requests for the purpose of prefetching) to store the requested (i.e., prefetched) data in the respective cache memories 114(1)-114(N) in advance of when the data is needed by the program being executed. The prefetchers 124(1)-124(N) are circuitry within the respective CPU cores 104(1)-104(N) and may, as an example, be implemented as part of the instruction pipelines of the CPU cores 104(1)-104(N). As described below in detail, using the prefetcher 124(1) as an example, the prefetcher 124(1) dynamically controls prefetching based on prefetching accuracy. As used herein, "prefetching accuracy" of a CPU core is a measure of whether prefetched data is utilized by (i.e., accessed by) that CPU core, e.g., before the prefetched data is evicted from the cache or before some other time-related condition occurs. If the measured prefetching accuracy is at or above a certain prefetching accuracy threshold (e.g., 90%), then prefetching is enabled. Conversely, if the measured prefetching accuracy is below the certain prefetching accuracy threshold or alternatively below a certain different, lower prefetching accuracy threshold, prefetching is partially or wholly disabled. In a preferred embodiment, the prefetching is only partially disabled such that the prefetching accuracy continues to be measured while prefetching is partially disabled and, if the prefetching accuracy increases to or above the certain prefetching accuracy threshold, then prefetching is again enabled. In this manner, prefetching is dynamically controlled based on the prefetching accuracy. In other words, the number of prefetching requests issued by the CPU core 104(1) is dynamically controlled based on the prefetching accuracy. Prefetching may be controlled at the other CPU cores 104(2)-104(N) in the same manner. As a result, the number of prefetching requests issued by the CPU cores 104(1)-104(N) when the respective prefetching accuracy is low is substantially reduced, which in turn reduces memory bandwidth contention among the CPU cores 104(1)-104(N).

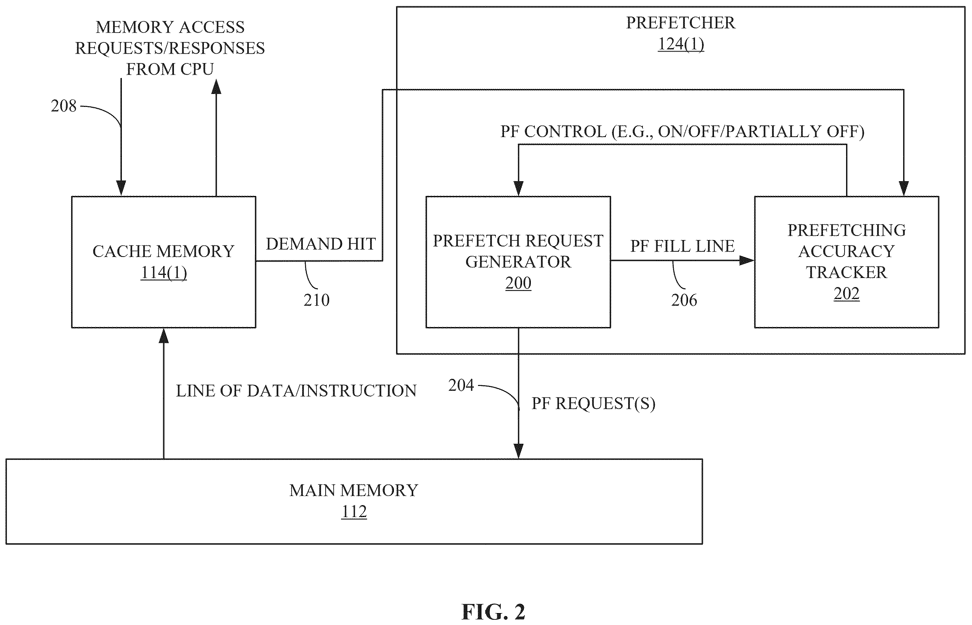

Figure 2 illustrates the prefetcher 124(1), as an example, in more detail in accordance with embodiments of the present disclosure. This description is equally applicable to the other prefetchers 124(2)-124(N). As illustrated, the prefetcher 124(1) includes a prefetch request generator 200 and a prefetching accuracy tracker 202. The prefetch request generator 200 generates prefetch requests 204 for data (and/or instructions) and sends the prefetch requests 204 to the memory system 108. In this example, the prefetch requests 204 are sent to the main memory 112; however, the prefetch requests 204 may be sent to some higher-level cache (e.g., a Level 3 (L3) cache) or may be sent from an L1 prefetcher to bring data in from a L2 cache. For each prefetch request 204, the data is requested from a particular one of the memory lines 120(1)-120(L) of the main memory 112 and stored in a memory line within the cache memory 114(1). A bit or other indicator associated with this memory line within the cache memory 114(1) is set to indicate that this memory line is a prefetched memory line. This action is referred to as a prefetch (PF) line fill. The prefetch request generator 200 provides a PF line fill indicator 206 to the prefetching accuracy tracker 202 for each instance of a PF line fill. This PF line fill indicator 206 is, in one embodiment, a single bit that is set to a first state (e.g., logic "1") to indicate a PF line fill and otherwise set to a second state (e.g., logic "0"). In addition, for each memory access request 208 from the CPU core 104(1), if there is a hit in the cache memory 114(1) for a memory line containing prefetched data (i.e., for a PF line), a demand hit indicator 210 is provided to the prefetcher 124(1). Again, the memory lines within the cache memory 114(1) that contain prefetched data may be indicated by associated bits or indicators within the cache memory 114(1). The demand hit indicator 210 is, in one embodiment, a single bit that is set to a first state (e.g., logic "1") to indicate a hit on a prefetched line stored in the cache memory 114(1) and otherwise set to a second state (e.g., logic "0").

The prefetching accuracy tracker 202 generates a measure of the prefetching accuracy of the CPU core 104(1) (i.e., for the prefetcher 124(1) of the CPU core 104(1)) based on the PF fill line indicator 206 and the demand hit indicator 210. More specifically, the prefetching accuracy tracker 202 maintains an unsigned saturating counter (CNT) that is dynamically updated in response to PF line fills indicated by the PF line fill indicator 206 and demand hits as indicated by the demand hit indicator 210. In order to update the unsigned saturating counter (CNT), the prefetching accuracy tracker 202 adjusts (e.g., increases) the unsigned saturating counter (CNT) by a first value (n) for each PF line fill and adjusts (e.g., decreases) the unsigned saturating counter (CNT) by a second value (m) for each demand hit. The first value (n) and the second value (m) are non-zero integer values where |n| < |m|. In accordance with one example embodiment described herein, the prefetching accuracy tracker 202 adjusts the unsigned saturating counter (CNT) by increasing the unsigned saturating counter (CNT) by the first value (n) for each PF line fill and decreasing the unsigned saturating counter (CNT) by the second value (m) for each demand hit. In this case, the first value (n) and the second value (m) are positive non-zero integer values where n < m, where the ratio of n/m represents an accuracy threshold such that the value of CNT will trend higher if the prefetching accuracy is less than the accuracy threshold and will trend downward if the prefetching accuracy is greater than the accuracy threshold. In this way, the value of CNT serves as a measure of the prefetching accuracy.

In one embodiment, the second value (m) is a fixed value, e.g., 100, and the first value (n) is configured based on a desired prefetching accuracy. For example, if the desired prefetching accuracy is 90% (i.e., there will be a demand hit for 90% of the prefetched memory lines), then the first value (n) may be configured as n = 0.9m. So, if m = 100, then n = 90. Note that, in order to avoid non-integer values of n, the value of n may be computed as n = ceil(A*m) or n = floor(A*m), where A is the desired threshold accuracy, ceil() is the ceiling function, and floor is the floor function. In addition or alternatively, in one embodiment, the first value (n), the second value (m), or both the first value (n) and the second value (m) are dynamically configured (e.g., by the CPU core 104(1) or the processor 102 in general) based on memory bandwidth utilization such that the accuracy threshold is dynamically controlled based on memory bandwidth utilization. The memory bandwidth utilization may be provided by the memory system 108 or may correspond to or be determined based on the number of memory access requests made by the CPU core 104(1) or by all of the CPU cores 104(1)-104(N) over a defined period of time, based on a running average number of memory access requests over a defined time window, or the like.

The prefetching accuracy tracker 202 further operates to dynamically control prefetching (i.e., control the operation of the prefetch request generator 200) based on the prefetching accuracy of the CPU core 104(1) as indicated by the unsigned saturating counter (CNT). More specifically, if the measured prefetching accuracy as indicated by the unsigned saturating counter (CNT) is at or above a certain prefetching accuracy threshold (e.g., accuracy threshold TH1, which may be, for example, 90%), then prefetching is enabled. Conversely, if the measured prefetching accuracy as indicated by the unsigned saturating counter (CNT) is below a certain prefetching accuracy threshold (e.g., accuracy threshold TH1 or, alternatively accuracy threshold TH2, which is less than TH1), prefetching is disabled or partially disabled. As described below in more detail, a CNT threshold, which is also referred to herein as a "timeliness threshold," is used to determine when, based on the CNT value, the prefetching is to be partially or fully disabled or enabled.

When, based on the CNT value and the timeliness threshold, the prefetching accuracy tracker 202 decides to partially disable prefetching, the prefetching is partially disabled by activating a mechanism for reducing the number of prefetching requests issued by the prefetcher 124(1) (e.g., by the prefetch request generator 200). Ideally, the number of prefetching requests issued by the prefetcher 124(1) when prefetching is partially disabled is much less than the number of prefetching request issued by the prefetcher 124(1) when prefetching is activated. For example, prefetching may be partially disabled by filtering the prefetch requests 204 generated by the prefetch request generator 200 such that only a subset of the generated prefetch requests 204 (e.g., prefetch requests 204 for a subset the memory locations within the main memory 112) are sent to the main memory 112. In a preferred embodiment, the prefetching is only partially disabled such that the prefetching accuracy continues to be measured based on the reduced number of prefetching requests issued by the prefetcher 124(1) and, if the prefetching accuracy increases to or above a certain prefetching accuracy threshold (e.g., TH1), then prefetching is again enabled.

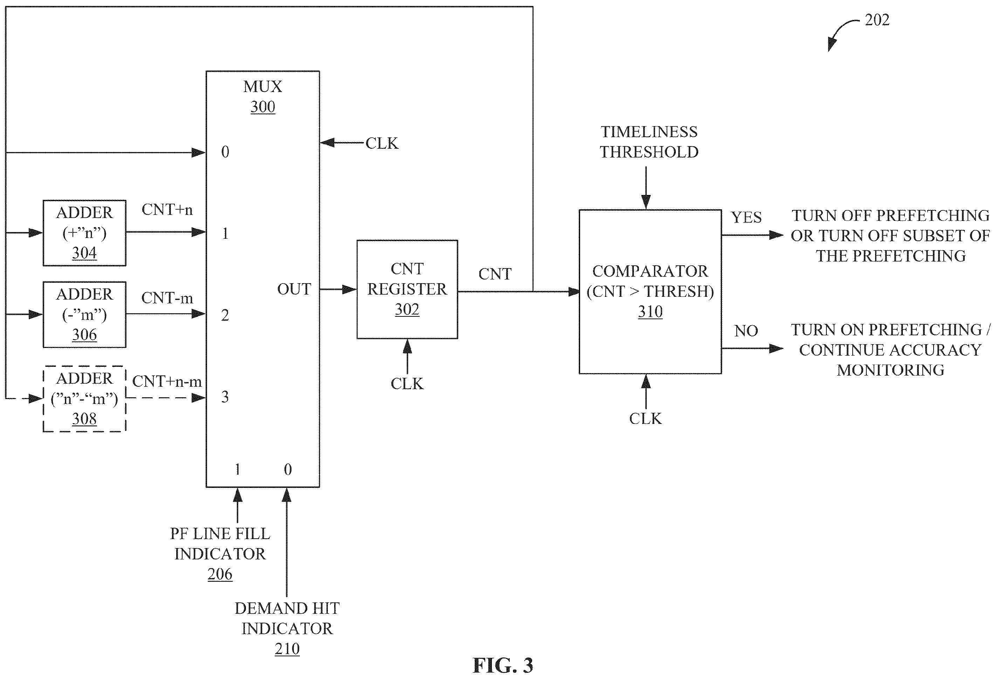

Figure 3 is a block diagram of one example embodiment of the prefetching accuracy tracker 202. As illustrated, in order to maintain the unsigned saturating counter (CNT), the prefetching accuracy tracker 202 includes a multiplexer (MUX) 300, a register 302 referred to herein as the "CNT register 302," and adders 304 and 306. Adder 308 is optional and may be included in implementations in which the computing system 100 enables a PF line fill for one memory line and a demand hit for another memory line to occur simultaneously. In operation, the CNT register 302 is initialized to a starting value, which in this example is 0. In this example, the PF line fill indicator 206 (which in this example is a single bit) is provided to the "1" control input of the MUX 300, the demand hit indicator 210 (which in this example is a single bit) is provided to the "0" control input of the MUX 300, the CNT value is provided to the "0" input of the MUX 300, CNT+n which is output by the adder 304 is provided to the "1" input of the MUX 300, CNT-m which is output by the adder 306 is provided to the "2" input of the MUX 300, and optionally CNT+n-m which is output by the adder 308 is provided to the "3" input of the MUX 300. The output of the MUX 300 is thus, in this example:
- CNT, if both the PF line fill indicator 206 and the demand hit indicator 210 are "0" (i.e., if neither a PF line fill or demand hit has occurred during the last clock cycle);
- CNT+n, if the PF line fill indicator 206 is "1" and the demand hit indicator 210 is "0" (i.e., if a PF line fill occurred during the last clock cycle);
- CNT-m, if the demand hit indicator 210 is "1" and the PF line fill indicator 206 is "0" (i.e., if a demand hit occurred during the last clock cycle);
- (optional) CNT+n-m, if both the PF line fill indicator 206 and the demand hit indicator 210 are "1" (i.e., if both a PF line fill and a demand hit have occurred during the last clock cycle).
At the rising edge of the clock (CLK), the CNT register 302 is updated to store the value of the output of the MUX 300. This continues for each clock cycle such that CNT is dynamically updated for each PF line fill and each demand hit on a prefetched cache line.

The value CNT is a measure of the prefetching accuracy of the prefetcher 124(1). More specifically, the value of CNT will trend in one direction (e.g., trend upwards) if the prefetching accuracy is less than the prefetching accuracy threshold (i.e., the desired prefetching accuracy) defined by the ratio of n/m, and otherwise trend in the opposite direction (e.g., trend downwards). In the example of Figure 3, lower values of CNT indicate that prefetching accuracy is greater than the prefetching accuracy threshold, whereas higher values of CNT indicate that the prefetching accuracy is less than the prefetching accuracy threshold. In this regard, Table 1 illustrates an example in which the value of CNT is updated over time for an example in which CNT is initialized to 0, n = 90, and m = 100. As can be seen in Table 1, CNT is increased by 90 for each PF line fill and decreased by 100 for each demand hit on a prefetched line, where the CNT saturates at 0 (i.e., cannot fall below 0). If the prefetching accuracy is at or above 90%, the value of CNT will over time saturate at 0; otherwise, the value of CNT will over time continue to increase.

**Table 1**

| **Time** | **PF Line Fill** | **Demand Hit** | **CNT** |
|---|---|---|---|
| 0 | 0 | 0 | 0 |
| 1 | 1 | 0 | 90 |
| 2 | 1 | 0 | 180 |
| 3 | 0 | 1 | 80 |
| 4 | 1 | 0 | 170 |
| 5 | 0 | 1 | 70 |
| 6 | 1 | 0 | 160 |
| 7 | 0 | 1 | 60 |
| 8 | 1 | 0 | 150 |
| 9 | 0 | 1 | 50 |
| 10 | 1 | 0 | 140 |
| 11 | 0 | 1 | 40 |
| 12 | 1 | 0 | 130 |
| 13 | 0 | 1 | 30 |
| 14 | 1 | 0 | 120 |
| 15 | 0 | 1 | 20 |
| 16 | 1 | 0 | 110 |
| 17 | 0 | 1 | 10 |
| 18 | 1 | 0 | 100 |
| 19 | 0 | 1 | 0 |
| 20 | 1 | 0 | 90 |
| 21 | 0 | 1 | 0 |
| 22 | 1 | 0 | 90 |
| 23 | 0 | 1 | 0 |
| 24 | 1 | 0 | 90 |
| 25 | 1 | 0 | 180 |
| 26 | 1 | 1 | 170 |
| ... | ... | ... | ... |

The prefetching accuracy tracker 202 also includes a comparator 310 that compares the value of CNT to a certain threshold, which may be predefined (e.g., static) or configurable. This threshold is also referred to herein as a "timeliness threshold" in that it allows for a certain number of prefetches to occur, without yet having a demand hit, before declaring that the prefetching accuracy is low. If the value of CNT is greater than the CNT threshold, the prefetcher accuracy is deemed to be low and, as such, prefetching is disabled or at least partially disabled (e.g., an indication is sent to the prefetch request generator 200 to disable or partially disable prefetch request generation). Conversely, if the value of CNT is not greater than the CNT threshold, the prefetching accuracy is deemed to be high and, as such, prefetching is enabled (i.e., turned on or fully activated). Table 2 illustrates an example in which CNT is initialized to 0, n = 90, m = 100, and the CNT threshold (i.e., the timeliness threshold) is 900. In the example of Table 2, CNT increases above the 900 threshold at time 108 and, in response, prefetching is partially deactivated. While prefetching is partially deactivated, the prefetch request generator 200 continues to output a small number of prefetch requests, and the prefetching accuracy tracker 202 continues to update CNT. Then, in the example of Table 2, at time 174, CNT decreases below the 900 threshold and, as a result, prefetching is activated (fully). Note that while the same CNT (i.e., timeliness threshold) is used to determine when to activate prefetching and when to partially deactivate prefetching in the example of Figure 3 and the specific example of Table 2, in an alternative embodiment, different CNT (i.e., timeliness) thresholds are used for activation and deactivation (e.g., CNT threshold X for activation and CNT threshold Y for deactivation/partial deactivation, where X and Y are positive integer values and Y < X). Still further, with respect to partial or full deactivation, in one example embodiment, different timeliness thresholds may be used, where a first CNT threshold may be used for partial deactivation and a second CNT threshold may be used for full deactivation. In addition or alternatively, other criteria may be considered when determining whether to partially or fully deactivate prefetching. Such criteria may include, for example, memory bandwidth utilization (e.g., fully deactivate if memory utilization is greater than a certain memory bandwidth utilization threshold).

**Table 2**

| Time | PF Line Fill | Demand Hit | CNT | PF Status |
|---|---|---|---|---|
| 0 | 0 | 0 | 0 | Active |
| 1 | 1 | 0 | 90 | Active |
| 2 | 1 | 0 | 180 | Active |
| 3 | 0 | 1 | 80 | Active |
| 4 | 1 | 0 | 170 | Active |
| ... | ... | ... | ... | ... |
| 107 | 1 | 0 | 820 | Active |
| 108 | 1 | 0 | 910 | Partially Deactivated |
| 109 | 0 | 0 | 910 | Partially Deactivated |
| ... | ... | ... | ... | ... |
| 174 | 0 | 1 | 810 | Active |
| 175 | 0 | 1 | 710 | Active |
| ... | ... | ... | ... | ... |

It should be noted that the example embodiment of the prefetching accuracy tracker 202 illustrated in Figure 3 is only an example. Numerous variations will be apparent to those of ordinary skill in the art. For example, the PF line fill indicator 206 may alternatively be provided to the "0" control input of the MUX 300 and the demand hit indicator 210 may alternatively be provided to the "1" control input of the MUX 300, in which case the output of the adder 304 would alternatively be provided to the "2" input of the MUX 300 and the output of the adder 306 would alternatively be provided to the "1" input of the MUX 300.

As another example, in the embodiment of Figure 3, a low value of CNT indicates high prefetching accuracy and a high value of CNT indicates a low prefetching accuracy. However, in an example alternative embodiment, a high value of CNT indicates high prefetching accuracy and a low value of CNT indicates a low prefetching accuracy. In this alternative, the CNT is initialized to a high value (e.g., a maximum value of the unsigned saturating counter), decreased by the first value (n) for each PF line fill, and increased by the second value (m) for each demand hit. Then, the CNT value would be compared to a threshold, below which prefetching would be deactivated or partially deactivated.

As yet another example, while in the example embodiments above prefetching is preferably partially disabled when the prefetching accuracy is low such that the prefetching accuracy continues to be monitored (i.e., CNT continues to be updated) while prefetching is partially disabled, the present disclosure is not limited thereto. For example, in an example alternative embodiment, prefetching is fully deactivated in response to determining that the prefetching accuracy is low (e.g., CNT falls below the certain threshold). In this case, prefetching may subsequently be reactivated based upon the occurrence of one or more conditions such as, for example, expiration of a defined or configured amount of time after prefetching is fully deactivated, memory bandwidth utilization falling below a defined or configured bandwidth utilization threshold, CNT falling below a threshold as a result of a mechanism that reduces the value of CNT over time in a predefined or predetermined manner (e.g., reduce CNT by X every Y amount of time), or the like.

As yet another example, while a single accuracy threshold, which is defined by the ratio of n/m, is used in the example embodiment above, the present disclosure is not limited thereto. For example, separate unsigned saturating counters with different values of n and/or m may be used to monitor the prefetching accuracy with respect to a first prefetching accuracy threshold for partially disabling the prefetching and a second prefetching accuracy threshold for fully disabling the prefetching. As one specific, nonlimiting example, prefetching may be partially disabled when a first CNT value used to monitor for a first accuracy threshold falls below a first timeliness threshold, and prefetching may be fully disabled when a second CNT value used to monitor for a second accuracy falls below a second timeliness threshold, where the first accuracy threshold is greater than the second accuracy threshold.

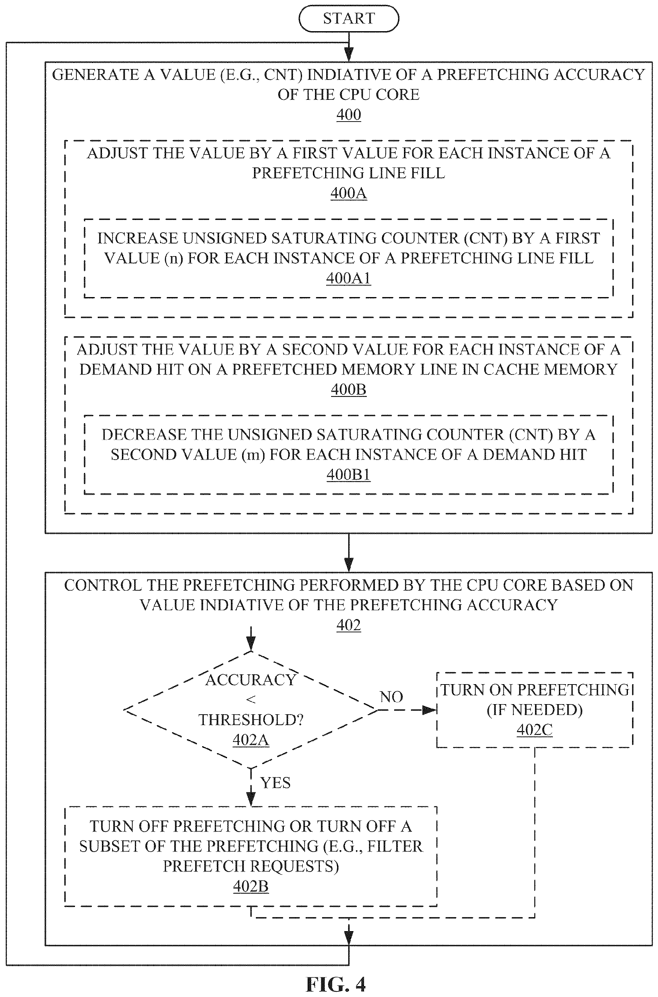

Thus far, the description has focused on the computing system 100. Now, the description will turn to a procedure for dynamically controlling prefetching in a computing system (e.g., the computing system 100), in accordance with embodiments of the present disclosure. In this regard, Figure 4 is a flow chart that illustrates a procedure for dynamically controlling prefetching in a computing system (e.g., in the computing system 100) in accordance with embodiments of the present disclosure. Optional actions are represented in Figure 4 by dashed lines/boxes. Further, while the actions are illustrated in Figure 4 as occurring in a particular order, the actions may be performed in any suitable order unless otherwise stated or explicitly required. In one example, the procedure of Figure 4 is performed separately by each of the prefetchers 124(1)-124(N) of the respective CPU cores 104(1)-104(N). For this description, the procedure of Figure 4 is described as being performed by the CPU core 104(1) and, more specifically, the prefetcher 124(1) of the CPU core 104(1).

As illustrated, the CPU core 104(1) generates a value (e.g., CNT) indicative of a prefetching accuracy of prefetching performed by the CPU core 104(1) (action 400). In one embodiment, the value indicative of the prefetching accuracy of the prefetching performed by the CPU core 104(1) is an unsigned saturating counter (CNT) value, and generating the value indicative of the prefetching accuracy of prefetching performed by the CPU core 104(1) includes adjusting (action 400A) the unsigned saturating counter (CNT) value by a first value for each instance of a prefetching line fill in which a prefetched memory line is stored in cache memory for the CPU core 104(1) and adjusting (action 400B) the unsigned saturating counter (CNT) value by a second value for each instance of a hit on a prefetched memory line in the cache memory. In one embodiment, the magnitude of the first value is less than a magnitude of the second value. The first and second values may be chosen to be proportional to one another, where at least one of the first and second values is also chosen to be proportional to a target prefetching accuracy for the CPU core 104(1) (e.g., the ratio of the first value to the second value defines the target prefetching accuracy or accuracy threshold). The selection of the first and second values may further take into consideration the size of the unsigned saturating counter. In one embodiment, the second value is a configurable or predefined value, and the first value is a function of a target prefetching accuracy for the CPU core 104(1). In one embodiment, the prefetching of the CPU core 104(1) requests memory lines from memory (e.g., the main memory 112) of the computing system 100 to be stored in the cache memory (e.g., cache memory 114(1)), and either or both of the first and second values are a function of an amount of bandwidth for the memory for processing memory access requests from the CPU core 104(1) and one or more additional CPU cores of the computing system 100 is being utilized.

In one embodiment, adjusting the unsigned saturating counter (CNT) in action 400A includes increasing the unsigned saturating counter (CNT) by the first value (n) for each instance of a prefetching line fill in which a prefetched memory line is stored in the cache memory for the CPU core 104(1) (action 400A1), and adjusting the unsigned saturating counter (CNT) value by the second value in action 400B includes decreasing the unsigned saturating counter (CNT) by the second value (m) for each instance of a hit on a prefetched memory line in the cache memory (action 400B 1).

The CPU core 104(1) controls the prefetching performed by the CPU core 104(1) based on the value (e.g., CNT) indicative of the prefetching accuracy (action 402). In one embodiment, controlling the prefetching includes determining, based on the value indicative of the prefetching accuracy, that the prefetching accuracy of the CPU core 104(1) is less than a first prefetching accuracy threshold (action 402A; YES) and, in response thereto, at least partially deactivating the prefetching of the CPU core 104(1) (action 402B). Note that, in the example embodiments described above, the prefetching accuracy is determined to be less than the first prefetching accuracy when the CNT value is less than a certain CNT threshold (also referred to herein as a timeliness threshold). When prefetching is partially deactivated, the CPU core 104(1) issues fewer prefetching requests than when prefetching is activated. In this example, if the prefetching accuracy, as indicated by the value, is not less than the threshold accuracy, prefetching is turned on, if needed (e.g., if currently partially deactivated) (action 402C). The process then returns to action 400 and is repeated.

In one embodiment, if prefetching is partially deactivated in action 402B, the CPU core 104(1) will continue to update the value (e.g., CNT) indicative of the prefetching accuracy. Upon determining in action 402A that the prefetching accuracy as indicated by the value is no longer less than the threshold accuracy (action 402A, NO), the CPU core 104(1) fully reactivates (i.e., turns on) prefetching in action 402C. In the example above, the prefetching accuracy may be determined to be less than the accuracy threshold when the CNT value is less than the CNT threshold.

If prefetching is fully deactivated in action 402B, the prefetching may subsequently be reactivated based upon the occurrence of one or more conditions such as, for example, expiration of a defined or configured amount of time after prefetching is fully deactivated, memory bandwidth utilization falling below a defined or configured bandwidth utilization threshold, CNT falling below a threshold as a result of a mechanism that reduces the value of CNT over time in a predefined or predetermined manner (e.g., reduce CNT by X every Y amount of time), or the like.

In the example of Figure 4, in action 402A, the CNT (or timeliness) threshold for partially deactivating or deactivating the prefetching is the same as the CNT (or timeliness) threshold used for determining when to reactivate the prefetching. However, in an example alternative embodiment, different CNT thresholds are instead used where a first CNT threshold (TH1) is used to determine when to deactivate or partially deactivate prefetching and a second CNT threshold (TH2) is used to determine when to (re)activate prefetching, where TH1 < TH2. By using separate CNT thresholds, a ping-pong effect may be avoided where the CPU core 104(1) bounces back and forth between a state in which prefetching is deactivated or partially deactivated and a state in which prefetching is activated when the value (CNT) is near the CNT threshold.

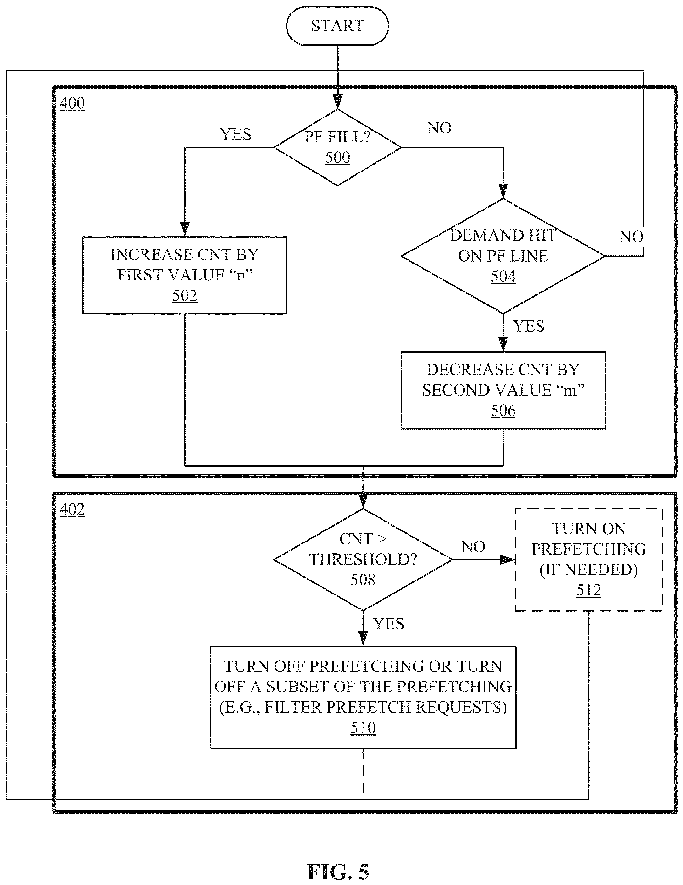

Figure 5 is a flow chart that illustrates a procedure for dynamically controlling prefetching in a computing system (e.g., in the computing system 100) in accordance with embodiments of the present disclosure in which the value indicative of the prefetching accuracy is an unsigned saturating counter (CNT) that is increased by a first value (n) for each instance of a PF line fill and decreased by a second value (m) for each instance of a demand hit in the cache memory for a prefetched memory line. Optional actions are represented in Figure 5 by dashed lines/boxes. The procedure of Figure 5 is one example embodiment of the procedure of Figure 4. Further, while the actions are illustrated in Figure 5 as occurring in a particular order, the actions may be performed in any suitable order unless otherwise stated or explicitly required. In one example, the procedure of Figure 5 is performed separately by each of the prefetchers 124(1)-124(N) of the respective CPU cores 104(1)-104(N). For this description, the procedure of Figure 5 is described as being performed by the CPU core 104(1) and, more specifically, the prefetcher 124(1) of the CPU core 104(1).

As illustrated, if the CPU core 104(1) performs a PF line fill (action 500, YES), the CPU core 104(1) increases CNT by the first value (n) (action 502). If there is a demand hit in the cache memory 114(1) for a prefetched line (e.g., prefetched data) (action 504, YES), the CPU core 104(1) decreases CNT by the second value (m) (action 506). The CPU core 104(1) determines whether CNT is greater than a certain CNT threshold (action 508). If so (action 508, YES), the CPU core 104(1) deactivates or partially deactivates prefetching, as described above (action 510). Otherwise, if CNT is not greater than the certain threshold (action 508, NO), the CPU core 104(1) may activate (i.e., fully activate) prefetching, if needed (e.g., if prefetching was previously deactivated or partially deactivated) (action 512). Note that while the same CNT threshold is used to determine when to activate prefetching and when to partially or fully deactivate prefetching in the example of Figure 5, in an exemplary alternative embodiment, different CNT thresholds are used for activation and deactivation (e.g., CNT threshold X for activation and CNT threshold Y for deactivation/partial deactivation, where X and Y are positive integer values and Y < X). Still further, with respect to partial or full deactivation, in one example embodiment, different CNT thresholds may be used, where a first CNT threshold may be used for partial deactivation and, for example, if the value of CNT still continues to increase, a second CNT threshold may be used for full deactivation. In addition or alternatively, other criteria may be considered when determining whether to partially or fully deactivate prefetching. Such criteria may include, for example, memory bandwidth utilization (e.g., fully deactivate if memory utilization is greater than a certain memory bandwidth utilization threshold).

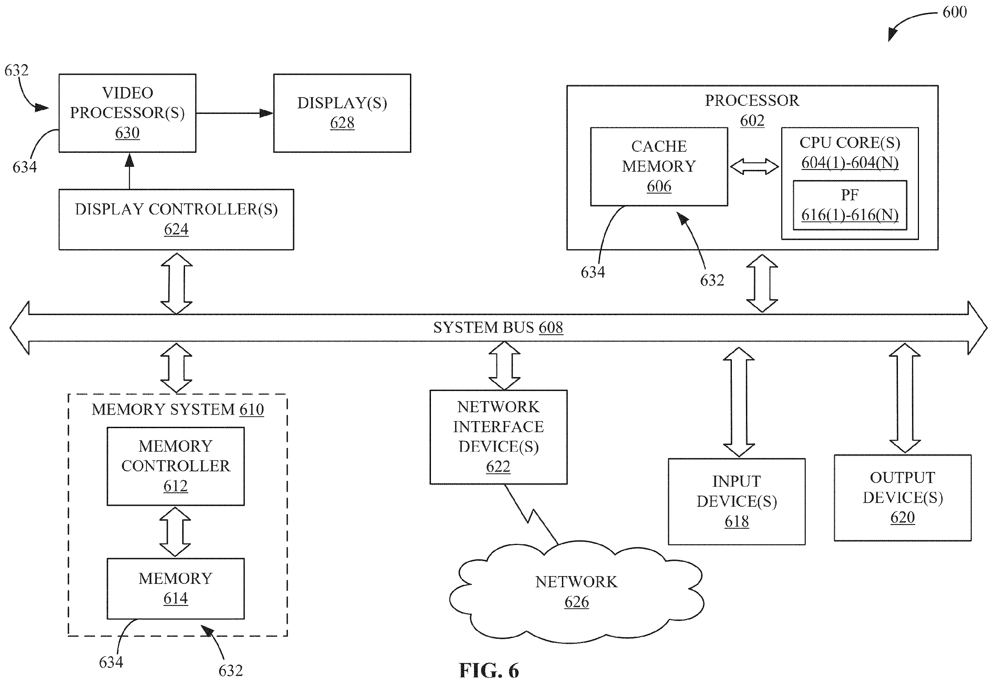

Figure 6 illustrates an example of a processor-based system 600 that can be the same or similar to the computing system 100 in Figure 1 as an example. The processor-based system 600 includes a processor 602 that includes CPU cores 604(1)-604(N). The processor 602 has a coupled cache memory 606 for rapid access to temporarily stored data. The processor 602 is coupled to a system bus 608 and can intercouple devices included in the processor-based system 600. Although not illustrated in Figure 6, multiple system buses 608 could be provided, wherein each system bus 608 constitutes a different fabric. As is well known, the processor 602 communicates with these other devices by exchanging address, control, and data information over the system bus 608. For example, the processor 602 can communicate memory write and read requests to a memory system 610 as an example. The memory system 610 includes a memory controller 612 and memory 614 that can be provided in one or more memory chips, such as one or more DRAM chips for storing data. The CPU core(s) 604(1)-604(N) include prefetcher(s) 616(1)-616(N) that operate as described above with respect to the prefetchers 124(1)-124(N) to prefetch data and/or instructions from the memory 614 and store the prefetched data and/or instructions in the cache memory 606. The CPU core(s) 604(1)-604(N) operate to dynamically control prefetching based on prefetching accuracy, in accordance with any of the embodiments described herein with respect to Figures 1-5.

Other devices can be connected to the system bus 608. As illustrated in Figure 6, these devices can include one or more input devices 618, one or more output devices 620, one or more network interface devices 622, and one or more display controllers 624, as examples. The input device(s) 618 can include any type of input device, including, but not limited to, input keys, switches, voice processors, etc. The output device(s) 620 can include any type of output device, including, but not limited to, audio, video, other visual indicators, etc. The network interface device(s) 622 can be any devices configured to allow exchange of data to and from a network 626. The network 626 can be any type of network, including, but not limited to, a wired or wireless network, a private or public network, a Local Area Network (LAN), a Wireless LAN (WLAN), a Wide Area Network (WAN), a BLUETOOTH^{™} network, and the Internet. The network interface device(s) 622 can be configured to support any type of communications protocol desired.

The processor 602 may also be configured to access the display controller(s) 624 over the system bus 608 to control information sent to one or more displays 628. The display controller(s) 624 sends information to the display(s) 628 to be displayed via one or more video processors 630, which process the information to be displayed into a format suitable for the display(s) 628. The display(s) 628 can include any type of display, including, but not limited to, a Cathode Ray Tube (CRT), a Liquid Crystal Display (LCD), a plasma display, a Light Emitting Diode (LED) display, etc. The processor 602 and its cache memory 606, the memory system 610, and/or the network 626 can include computer instructions 632 that are non-transitory computer-readable media 634 to control the function of the processor 602 and the CPU core(s) 604(1)-604(N), as examples. Any of the functionality described above for the prefetcher(s) 616(1)-616(N) (i.e., the prefetcher(s) 114(1)-114(N)) can be as a result of the prefetcher(s) 616(1)-616(N) and/or other controller in the processor 602 executing the computer instructions 632.

Those of skill in the art will further appreciate that the various illustrative logical blocks, modules, circuits, and algorithms described in connection with the aspects disclosed herein may be implemented as electronic hardware, instructions stored in memory or in another computer readable medium and executed by a processor or other processing device, or combinations of both. The devices described herein may be employed in any circuit, hardware component, IC, or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The aspects disclosed herein may be embodied in hardware and in instructions that are stored in hardware, and may reside, for example, in RAM, flash memory, Read Only Memory (ROM), Electrically Programmable ROM (EPROM), Electrically Erasable Programmable ROM (EEPROM), registers, a hard disk, a removable disk, a CD-ROM, or any other form of non-transitory computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary aspects herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary aspects may be combined. It is to be understood that the operational steps illustrated in the flowchart diagrams may be subject to numerous different modifications as will be readily apparent to one of skill in the art. Those of skill in the art will also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The previous description of the disclosure is provided to enable any person skilled in the art to make or use the disclosure. Various modifications to the disclosure will be readily apparent to those skilled in the art, and the generic principles defined herein may be applied to other variations. Thus, the disclosure is not intended to be limited to the examples and designs described herein, but is to be accorded the widest scope consistent with the principles and novel features disclosed herein.

## Claims

1. A computing system, comprising:
a processor comprising a Central Processing Unit (CPU) core and a cache memory for the CPU core;
wherein the CPU core is configured to:
generate a value indicative of a prefetching accuracy of the CPU core for prefetching of data, instructions, or both data and instructions from system memory external to the processor for storage in the cache memory for the CPU core; and
control the prefetching performed by the CPU core based on the value indicative of the prefetching accuracy.

2. The computing system of claim 1, wherein the value indicative of the prefetching accuracy of the CPU core is an unsigned saturating counter value, and the CPU core generates the value indicative of the prefetching accuracy of the CPU core by adjusting the unsigned saturating counter value by a first value for each instance of a prefetching line fill in which a prefetched memory line is stored in the cache memory for the CPU core and adjusting the unsigned saturating counter value by a second value for each instance of a hit on a prefetched memory line in the cache memory.

3. The computing system of claim 2, wherein a magnitude of the first value is less than a magnitude of the second value.

4. The computing system of claim 3, wherein the second value is a fixed value, and the first value is a function of a target prefetching accuracy for the CPU core.

5. The computing system of claim 3, wherein the prefetching requests memory lines from memory of the computing system to be stored in the cache memory, and either or both of the first and second values are a function of an amount of bandwidth for the memory for processing memory access requests from the CPU core and one or more additional CPU cores of the computing system are being utilized.

6. The computing system of claim 3, wherein adjusting the unsigned saturating counter value by the first value comprises increasing an unsigned saturating counter by the first value for each instance of a prefetching line fill in which a prefetched memory line is stored in the cache memory for the CPU core and adjusting the unsigned saturating counter value by the second value comprises decreasing the unsigned saturating counter by the second value for each instance of a hit on a prefetched memory line in the cache memory.

7. The computing system of claim 1, wherein, in order to control the prefetching of the CPU core, the CPU core is further configured to:
determine, based on the value indicative of the prefetching accuracy, that the prefetching accuracy of the CPU core is less than a first prefetching accuracy threshold; and
in response to determining that the prefetching accuracy of the CPU core is less than the first prefetching accuracy threshold, partially deactivate the prefetching of the CPU core.

8. The computing system of claim 7, wherein, when prefetching is partially deactivated, the CPU core issues fewer prefetching requests than when prefetching is activated.

9. The computing system of claim 7, wherein the CPU core is further configured to:
update the value indicative of the prefetching accuracy of the CPU core while the prefetching is partially deactivated;
determine, based on the updated value, that the prefetching accuracy of the CPU core has increased to or above a second prefetching accuracy threshold for activating the prefetching of the CPU core; and
in response to determining that the prefetching accuracy of the CPU core has increased to or above the second prefetching accuracy threshold, activate the prefetching of the CPU core.

10. The computing system of claim 9, wherein the first prefetching accuracy threshold is equal to the second prefetching accuracy threshold.

11. The computing system of claim 9, wherein the first prefetching accuracy threshold is less than the second prefetching accuracy threshold.

12. A method of controlling prefetching performed by a Central Processing Unit (CPU) core of a processor in a computing system, the method comprising:
generating a value indicative of a prefetching accuracy of the CPU core for prefetching of data, instructions, or both data and instructions from system memory external to the processor for storage in a cache memory of the CPU core within the processor; and
controlling the prefetching performed by the CPU core based on the value indicative of the prefetching accuracy.

13. The method of claim 12, wherein the value indicative of the prefetching accuracy of the CPU core is an unsigned saturating counter value, and generating the value indicative of the prefetching accuracy of the CPU core comprises:
adjusting the unsigned saturating counter value by a first value for each instance of a prefetching line fill in which a prefetched memory line is stored in the cache memory for the CPU core; and
adjusting the unsigned saturating counter value by a second value for each instance of a hit on a prefetched memory line in the cache memory.

14. The method of claim 12, wherein controlling the prefetching of the CPU core comprises:
determining, based on the value indicative of the prefetching accuracy, that the prefetching accuracy of the CPU core is less than a first prefetching accuracy threshold; and
in response to determining that the prefetching accuracy of the CPU core is less than the first prefetching accuracy threshold, partially deactivating the prefetching of the CPU core.

15. The method of claim 14, further comprising:
updating the value indicative of the prefetching accuracy of the CPU core while the prefetching is partially deactivated;
determining, based on the updated value, that the prefetching accuracy of the CPU core has increased to or above a second prefetching accuracy threshold for activating the prefetching of the CPU core; and
in response to determining that the prefetching accuracy of the CPU core has increased to or above the second prefetching accuracy threshold, activating the prefetching of the CPU core.
